# EUROPEAN PATENT APPLICATION

(11) **EP 3 795 014 A1**
(43) Date of publication of application: **24.03.2021**
(21) Application number: 19198601.7
(22) Date of filing: 20.09.2019
(51) Int. Cl.: A24F 40/65, A24F 40/90, H02J 50/10, H04M 1/725

(54) **WIRELESS CHARGER FOR A SMOKING SUBSTITUTE DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A wireless charger for a smoking substitute device includes: a data receiving module configured to receive telemetry data from the smoking substitute device; and a wireless transmission module configured to transmit the telemetry data to an external location. A smoking substitute kit includes: a smoking substitute device, and the wireless charger, wherein: the wireless charger is configured to charge the smoking substitute device when the smoking substitute device is in proximity to the wireless charger.

## Description

### TECHNICAL FIELD OF THE INVENTION

The present invention relates to a wireless charger for a smoking substitute device, as well as a smoking substitute kit including the wireless charger and a smoking substitute device.

### BACKGROUND TO THE INVENTION

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful by-products. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices, which may also be known as electronic nicotine delivery systems, may comprise electronic systems that permit a user to simulate the act of smoking by producing an aerosol, also referred to as a "vapour", which is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vaporisable liquid, typically referred to (and referred to herein) as "e-liquid", is heated by a heater to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerine.

A typical vaping smoking substitute device includes a mouthpiece, a power source (typically a battery), a tank or liquid reservoir for containing e-liquid, as well as a heater. In use, electrical energy is supplied from the power source to the heater, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a heater and a sealed tank which is pre-filled with e-liquid and is not intended to be refilled by an end user. One subset of closed system vaping smoking substitute devices include a main body which includes the power source, wherein the main body is configured to be physically and electrically coupled to a consumable including the tank and the heater. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a vaporiser, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the vaporiser, which heats e-liquid from the tank to produce a vapour which is inhaled by a user through the mouthpiece.

Another example vaping smoking substitute device is the blu PRO™ e-cigarette. The blu PRO™ e cigarette is an open system device which includes a main body, a (refillable) tank, and a mouthpiece. The main body and tank are physically and electrically coupled together by screwing one to the other. The mouthpiece and refillable tank are physically coupled together by screwing one into the other, and detaching the mouthpiece from the refillable tank allows the tank to be refilled with e-liquid. The device is activated by a button on the main body. When the device is activated, electrical energy is supplied from the power source to a vaporiser, which heats e-liquid from the tank to produce a vapour which is inhaled by a user through the mouthpiece.

An alternative to the "vaping" approach is the so-called Heated Tobacco ("HT") approach in which tobacco (rather than an e-liquid) is heated or warmed to release vapour. HT is also known as "heat not burn" ("HNB"). The tobacco may be leaf tobacco or reconstituted tobacco. In the HT approach the intention is that the tobacco is heated but not burned, i.e. the tobacco does not undergo combustion.

The heating, as opposed to burning, of the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol may contain nicotine and/or flavour compounds.

Because smoking substitute devices are often battery powered, they require regular charging. It is often desirable for a user to know when the smoking substitute device is fully charged, so that they are aware when to disconnect it and resume use. However, it is clearly undesirable for a user to have to wait with their device, or to keep checking to see whether it is fully-charged. The present disclosure has been devised in the light of the above considerations.

### SUMMARY OF THE INVENTION

In order to address the above, in broad terms the present invention provides a wireless charger which is able to receive charging status information from the smoking substitute device which it is currently charging, and then to transmit that information to an external location, from which it may be obtained by a user. In this way, the user can remotely receive information about the charge status of the smoking substitute device without having to keep returning to the device. Specifically, this is achieved in the provision of a first aspect of the present invention, namely a wireless charger for a smoking substitute device, the wireless charger including: a data receiving module for receiving telemetry data from the smoking substitute device; a wireless transmission module for transmitting the telemetry data to an external location. Having the wireless transmissions device as part of a wireless charger reduces the number of components required to achieve the advantage of the present invention. The wireless charger of the present invention enables transfer of telemetry data between the smoking substitute device and the external device without the need for direct syncing between the smoking substitute device and the external location. In other words, if a user has not synced the smoking substitute device with an external device such as a smartphone or tablet for a long time, telemetry data can still be recorded wirelessly.

In the present application, the term "wireless charger" refers to a charger for a smoking substitute device which transfers power to a power source of the smoking substitute device (e.g. a rechargeable battery) without any direct electrical contact. In preferred embodiments, the wireless charger is configured to charge the smoking substitute device using electromagnetic induction, and accordingly may include a transmitter coil. It should be stressed that the transmitter coil is separate from the wireless transmission means. An alternating electromagnetic field may be generated in the transmitter coil, which the then able to induce a current in a receiver coil in the smoking substitute device. The invention is not directed towards the mechanics of the wireless charging, but it should suffice to note that there are other methods of wireless charging available, of which the skilled person will be aware.

The wireless charger preferably includes a charging region, wherein when the smoking substitute device is placed in the charging region, the transmitter coil of the wireless charger and the receiver coil of the smoking substitute device are relatively positioned so that a current in the transmitter coil is able to induce a current in the receiver coil, thereby charging the smoking substitute device.

In some embodiments, the charging region may include a flat surface on which the smoking substitute device may be placed so that the receiver coil in the smoking substitute device is aligned with the transmitter coil in the wireless charger. Alternatively, the charging region may include a recess, for example a cylindrical or substantially cylindrical recess configured to receive the smoking substitute device. In such cases, the transmitter coil may be located around the circumference (or outer perimeter) of the recess. The coil could either be on the inner surface of the recess, or it could be embedded within the cylindrical wall of the recess, spaced from the surface. In such cases, the corresponding receiver coil of the smoking substitute device may be located at a portion of the smoking substitute device which is to be inserted into the recess. Conversely, the charging region may include a cylindrical or substantially cylindrical projection, and the transmitter coil could be located around the circumference of the outer surface of the projection. Alternatively, the transmitter coil could be embedded within the wall of the projection, spaced from the surface. In such arrangements, the smoking substitute device may include a corresponding recess configured to receive the projection of the wireless charger.

The wireless charger may be in the form of a power pack, i.e. a rechargeable module which does not need to be connected to e.g. mains electricity to charge the smoking substitute device. Alternatively, the wireless charger may be in the form of a more conventional charger, which must be plugged in to charge the smoking substitute device.

In some embodiments of the present invention, the data receiving module may be configured to receive the telemetry data from the smoking substitute device, for example using Bluetooth, or specifically Bluetooth Low Energy. Similarly, the wireless transmission module may be configured to transmit the telemetry data to an external device, for example using Bluetooth, or specifically Bluetooth Low Energy. Alternatively, in other embodiments of the present invention, the data receiving module may be configured to receive the telemetry data from the smoking substitute device, for example across a cellular network. Similarly, the wireless transmission module may be configured to transmit the telemetry data to an external device, for example across a cellular network. The skilled person will appreciate that any compatible combination of these different transmission mechanisms may apply to embodiments of the first aspect of the invention. Alternatively, in other embodiments of the present invention, the data receiving module may be configured to receive the telemetry data from the smoking substitute device, for example across a Wi-Fi network. Similarly, the wireless transmission module may be configured to transmit the telemetry data to an external device, for example across a Wi-Fi network.

In some embodiments, the external location may be an external device such as a smartphone, tablet, or computer. Alternatively, the alternative location may be a cloud storage facility. In preferred embodiments, for example, the wireless transmission module of the wireless charger may be configured to transmit the telemetry data to the cloud across a Wi-Fi network.

In some embodiments, the data received from the smoking substitute device may include a request, for example a charging request, i.e. a request to begin charging. In such cases, the wireless charger may be configured to begin charging of the smoking substitute device only in response to the data receiving module receiving a charge request. In this way, charging of the smoking substitute device may only take place when a user has sent a charging request, e.g. by pressing a button on the smoking substitute device. This is particularly useful in the case of power pack-style wireless chargers, as it can ensure that the energy stored on the power pack is not wasted when the user does not wish to charge the smoking substitute device. In some cases, the wireless charger may be configured to transmit data relating to the strength of the charging connection to the smoking substitute device, and/or the wireless charger may be configured to receive data relating to the strength of the charging connection from the smoking substitute device. The data relating to the strength of the charging connection is preferably numerical data, for example a percentage, or an absolute value. The wireless charger may be configured to adjust its charging power based on the strength of the charging connection. Specifically, the wireless charger may be configured to detect a change in the strength of the charging connection, and to adjust the charging power in response to the detection of the change. If the strength of the charging connection decreases, the wireless charger may be configured to increase the charging power, and if the strength of the charging connection increases, the wireless charger may be configured to decrease the charging power. In this way, the wireless charger can operate the most energy efficiently. It should be noted that "the strength of the charging connection" refers to the wireless connection between the smoking substitute device and the wireless, and may for example be based on the alignment of coils within the smoking substitute device and wireless charger. It is not used here to refer to the strength of the connection by which data is transmitter and received.

The wireless charger may include a memory which is configured to store the telemetry data received from the smoking substitute device. In this way, the telemetry data may be stored on the wireless charger before being transmitted to the external location by the wireless transmission module. This is advantageous in situations where, for example, there is no Bluetooth or Wi-Fi connection between the transmission module and external location; the data to be transmitted can be stored on the memory and then transmitted by the wireless transmission module to the external location at a later time. The memory may also be configured to act as a buffer, for example when the rate at which telemetry data is received from the smoking substitute device is greater than the rate at which telemetry data can be transferred to the external location. The wireless charger may also include a processor configured to perform processing on the telemetry data.

The telemetry data received from the smoking substitute device may include the information about the charge status of the smoking substitute. The information about charge status may include one or more of the following: the amount of battery life remaining in the battery of the smoking substitute device (expressed as e.g. a percentage, an estimated amount of time remaining, an estimated time at which the battery will run out, or a number of puffs remaining), an estimate of the amount of time until the battery of the smoking substitute device will be fully charged, an indication of whether the wireless charger is currently charging the smoking substitute device or not, and an indication that the battery is fully charged. In some embodiments, the wireless charger itself may further include a display which is configured to display the information (or a representation thereof) received from the smoking substitute device, which may include information about the charge status of the device. The display may be in the form of a screen, or a plurality of lights.

In addition to information about the charge status of the smoking substitute device, the telemetry data received from the smoking substitute device may also include information about the usage of the smoking substitute device. More specifically:
- The information relating to usage of the smoking substitute device may include statistics relating to usage of the smoking substitute device, e.g. which could then be presented to a user via the computing device (alternatively, usage statistics could be calculated at the computing device based on information received from the smoking substitute device).
- The information relating to usage of the smoking substitute device may include information relating to or describing a number of times the smoking substitute device has been activated. This information could for example include a number of times the device has been activated starting from a first activation by a user, and/or a number of times the device has been activated since the device was last charged.
- The information relating to usage of the smoking substitute device may include information relating to or describing one or more lengths of time for which the smoking substitute device has been activated. This information could for example include an average length of time the smoking substitute device has been activated by a user (per activation), and/or a total length of time the smoking substitute device has been activated by a user (over all activations).
- The information relating to usage of the smoking substitute device may include information relating to or describing one or more flavours used with the smoking substitute device. This information could for example include an indication of the/each flavour of consumable material (e.g. e-liquid or tobacco) used with the smoking substitute device.
- If the smoking substitute device includes a main body for use with a consumable, the information relating to usage information may include information associated with the consumable, e.g. information relating to or describing one or more flavours of consumable used with the smoking substitute device. The information could include an indication of the/each flavour of consumable liquid in the consumables that have been used with the smoking substitute device.

The telemetry data which is transmitted from the wireless transmission module to the external location may include the same information. It will be appreciated that such information is useful for the user of the smoking substitute device/external device. As such, in some embodiments of the present invention, in addition to this information or the charge status, the telemetry data which is transmitted from the wireless transmission module to the external device may include a trigger, the trigger being configured to cause the external device to generate and/or display a notification relating to the information.

In some embodiments of the invention, the data receiving module may be configured only to receive telemetry data from the smoking substitute device when the smoking substitute device is being charged by the wireless charger. In this way, the battery life of the smoking substitute device may be preserved by ensuring that it need only transmit telemetry data to the wireless charger when it is being charged, i.e. when it is "plugged in". Alternatively, in some cases, the wireless charger may be configured automatically to receive the telemetry data when the smoking substitute device is being charged.

Another aspect of the present invention may provide a smoking substitute kit including a smoking substitute device, and a wireless charger according to the previous aspect of the invention, wherein the wireless charger is configured to charge the smoking substitute device when the smoking substitute device is in proximity with the wireless charger. The smoking substitute device preferably includes a receiver coil. Then, when the smoking substitute device is placed in a charging region of the wireless charger, the transmitter coil of the wireless charger and the receiver coil of the smoking substitute device are relatively positioned so that a current in the transmitter coil is able to induce a current in the receiver coil, thereby charging the smoking substitute device.

In embodiments in which the charging region of the wireless charger includes a flat surface, the receiver coil of the smoking substitute device is preferably located such that when the smoking substitute device is placed on the flat surface, the receiver coil in the smoking substitute device is aligned with the transmitter coil in the wireless charger. When the charging region of the wireless charger includes a recess as discussed earlier in this application, the corresponding receiver coil of the smoking substitute device is preferably located at or in a portion of the smoking substitute device which is shaped or configured to be inserted into the recess. In embodiments in which the charging region of the wireless charger includes a cylindrical or substantially cylindrical projection as discussed earlier in this application, the smoking substitute device may include a corresponding recess configured to receive the projection of the wireless charger, wherein the receiver coil of the smoking substitute device is located around the circumference of the recess, or is embedded in the wall surrounding the recess.

The smoking substitute device preferably includes a wireless transmission module configured to transmit telemetry data to the data receiving module of the wireless charger, wherein the transmitted telemetry data may include information about a charge status of the smoking substitute device. The wireless transmission module of the smoking substitute device may be configured to transmit telemetry data to the data receiving module of the wireless charger using one of: Bluetooth (e.g. Bluetooth Low Energy), a cellular network, or a Wi-Fi network.

In some embodiments of the present invention, the data receiving module may be configured to receive telemetry data from the smoking substitute device, for example using Bluetooth, or specifically Bluetooth Low Energy. Similarly, the wireless transmission module may be configured to transmit telemetry data to an external device, for example using Bluetooth, or specifically Bluetooth Low Energy. Alternatively, in other embodiments of the present invention, the data receiving module may be configured to receive telemetry data from the smoking substitute device, for example across a cellular network. Similarly, the wireless transmission module may be configured to transmit telemetry data to an external device, for example across a cellular network. The skilled person will appreciate that any compatible combination of these different transmission mechanisms may apply to embodiments of the first aspect of the invention. Alternatively, in other embodiments of the present invention, the data receiving module may be configured to receive telemetry data from the smoking substitute device, for example across a Wi-Fi network. Similarly, the wireless transmission module may be configured to transmit telemetry data to an external device, for example across a Wi-Fi network.

The wireless transmission module of the smoking substitute device may be configured to transmit a request, for example a charging request, i.e. a request to begin charging, to the data receiving module of the wireless charger.

The wireless transmission module of the smoking substitute device may be configured to transmit information about the charge status of the smoking substitute. The information about charge status may include one or more of the following: the amount of battery life remaining in the battery of the smoking substitute device (expressed as e.g. a percentage, an estimated amount of time remaining, an estimated time at which the battery will run out, or a number of puffs remaining), an estimate of the amount of time until the battery of the smoking substitute device will be fully charged, an indication of whether the wireless charger is currently charging the smoking substitute device or not.

In addition to information about the charge status of the smoking substitute device, the wireless transmission module of the smoking substitute device may be configured to transmit data include information about the usage of the smoking substitute device, a non-exhaustive list of examples of which were set out earlier in this application

In order to conserve the battery life of the smoking substitute device, the wireless transmission module of the smoking substitute device may be configured only to transmit data to the data receiving module of the wireless charger when the smoking substitute device is being charged by the wireless charger. Alternatively, in other cases, the smoking substitute device may be configured to transmit telemetry data to the data receiving module of the wireless charger automatically when the smoking substitute device is being charged.

Further optional features of the smoking substitute device are set out below in detail.

The smoking substitute device may comprise a passage for fluid flow therethrough. The passage may extend through (at least a portion of) the smoking substitute device, between openings that may define an inlet and an outlet of the passage. The outlet may be at a mouthpiece of the smoking substitute device. In this respect, a user may draw fluid (e.g. air) into and through the passage by inhaling at the outlet (i.e. using the mouthpiece).

The device may comprise a tank (reservoir) for containing a vaporisable liquid (e.g. an e-liquid). The e-liquid may, for example, comprise a base liquid and e.g. nicotine. The base liquid may include propylene glycol and/or vegetable glycerine.

The tank may be defined by a tank housing. At least a portion of the tank housing may be translucent. For example, the tank housing may comprise a window to allow a user to visually assess the quantity of e-liquid in the tank. The tank may be referred to as a "clearomizer" if it includes a window, or a "cartomizer" if it does not. The passage may extend longitudinally within the tank and a passage wall may define the inner wall of the tank. In this respect, the tank may surround the passage e.g. the tank may be annular. The passage wall may comprise longitudinal ribs extending therealong. These ribs may provide support to the passage wall. The ribs may extend for the full length of the passage wall. The ribs may project (e.g. radially outwardly) into the tank.

The smoking substitute device may comprise a vaporiser. The vaporiser may comprise a wick. The vaporiser may further comprise a heater. The wick may comprise a porous material. A portion of the wick may be exposed to fluid flow in the passage. The wick may also comprise one or more portions in contact with liquid stored in the reservoir. For example, opposing ends of the wick may protrude into the reservoir and a central portion (between the ends) may extend across the passage so as to be exposed to fluid flow in the passage. Thus, fluid may be drawn (e.g. by capillary action) along the wick, from the reservoir to the exposed portion of the wick.

The heater may comprise a heating element, which may be in the form of a filament wound about the wick (e.g. the filament may extend helically about the wick). The filament may be wound about the exposed portion of the wick. The heating element may be electrically connected (or connectable) to a power source. Thus, in operation, the power source may supply electricity to (i.e. apply a voltage across) the heating element so as to heat the heating element. This may cause liquid stored in the wick (i.e. drawn from the tank) to be heated so as to form a vapour and become entrained in fluid flowing through the passage. This vapour may subsequently cool to form an aerosol in the passage.

The device may be in the form of a consumable. The consumable may be configured for engagement with a main body (i.e. so as to form a smoking substitute system). For example, the consumable may comprise components of the system that are disposable, and the main body may comprise non-disposable or non-consumable components (e.g. power supply, controller, sensor, etc.) that facilitate the delivery of aerosol by the consumable. In such an embodiment, the aerosol former (e.g. e-liquid) may be replenished by replacing a used consumable with an unused consumable.

In light of this, it should be appreciated that some of the features described herein as being part of the smoking substitute device may alternatively form part of a main body for engagement with the consumable.

The main body and the consumable may be configured to be physically coupled together. For example, the consumable may be at least partially received in a recess of the main body, such that there is snap engagement between the main body and the consumable. Alternatively, the main body and the consumable may be physically coupled together by screwing one onto the other, or through a bayonet fitting.

Thus, the consumable may comprise one or more engagement portions for engaging with a main body. In this way, one end of the consumable (i.e. the inlet end) may be coupled with the main body, whilst an opposing end (i.e. the outlet end) of the consumable may define a mouthpiece.

The main body or the consumable may comprise a power source or be connectable to a power source. The power source may be electrically connected (or connectable) to the heater. The power source may be a battery (e.g. a rechargeable battery). An external electrical connector in the form of e.g. a USB port may be provided for recharging this battery.

The consumable may comprise an electrical interface for interfacing with a corresponding electrical interface of the main body. One or both of the electrical interfaces may include one or more electrical contacts. Thus, when the main body is engaged with the consumable, the electrical interface may be configured to transfer electrical power from the power source to a heater of the consumable. The electrical interface may also be used to identify the consumable from a list of known types. The electrical interface may additionally or alternatively be used to identify when the consumable is connected to the main body.

The main body may alternatively or additionally be able to detect information about the consumable via an RFID reader, a barcode or QR code reader. This interface may be able to identify a characteristic (e.g. a type) of the consumable. In this respect, the consumable may include any one or more of an RFID chip, a barcode or QR code, or memory within which is an identifier and which can be interrogated via the interface.

The consumable or main body may comprise a controller, which may include a microprocessor. The controller may be configured to control the supply of power from the power source to the heater (e.g. via the electrical contacts). A memory may be provided and may be operatively connected to the controller. The memory may include non-volatile memory. The memory may include instructions which, when implemented, cause the controller to perform certain tasks or steps of a method.

The consumable or main body may comprise a wireless interface, which may be configured to communicate wirelessly with another device, for example a mobile device, e.g. via Bluetooth®. To this end, the wireless interface could include a Bluetooth® antenna. Other wireless communication interfaces, e.g. WiFi®, are also possible. The wireless interface may also be configured to communicate wirelessly with a remote server.

An airflow (i.e. puff) sensor may be provided that is configured to detect a puff (i.e. inhalation from a user). The airflow sensor may be operatively connected to the controller so as to be able to provide a signal to the controller that is indicative of a puff state (i.e. puffing or not puffing). The airflow sensor may, for example, be in the form of a pressure sensor or an acoustic sensor. The controller may control power supply to the heater in response to airflow detection by the sensor. The control may be in the form of activation of the heater in response to a detected airflow. The airflow sensor may form part of the consumable or the main body.

In an alternative embodiment the device may be a non-consumable device in which an aerosol former (e.g. e-liquid) of the device may be replenished by re-filling the tank of the device (rather than replacing the consumable). In this embodiment, the consumable described above may instead be a non-consumable component that is integral with the main body. Thus the device may comprise the features of the main body described above. In this embodiment, the only consumable portion may be e-liquid contained in the tank of the device. Access to the tank (for re-filling of the e-liquid) may be provided via e.g. an opening to the tank that is sealable with a closure (e.g. a cap).

The device may be a smoking substitute device (e.g. an e-cigarette device) and, when in the form of a consumable, may be a smoking substitute consumable (e.g. an e-cigarette consumable).

The invention includes the combination of the aspects and preferred features described except where such a combination is clearly impermissible or expressly avoided.

### BRIEF DESCRIPTION OF THE DRAWINGS

So that the invention may be understood, and so that further aspects and features thereof may be appreciated, embodiments illustrating the principles of the invention will now be discussed in further detail with reference to the accompanying figures, in which:
- Figure 1A is a front schematic view of a smoking substitute system;
- Figure 1B is a front schematic view of a main body of the system;
- Figure 1C is a front schematic view of a consumable of the system;
- Figure 2A is a schematic of the components of the main body;
- Figure 2B is a schematic of the components of the consumable;
- Figure 3 is a section view of the consumable; and
- Figure 4 is a system diagram of a smoking substitute system.

### DETAILED DESCRIPTION OF THE INVENTION

Aspects and embodiments of the present invention will now be discussed with reference to the accompanying figures. Further aspects and embodiments will be apparent to those skilled in the art. All documents mentioned in this text are incorporated herein by reference.

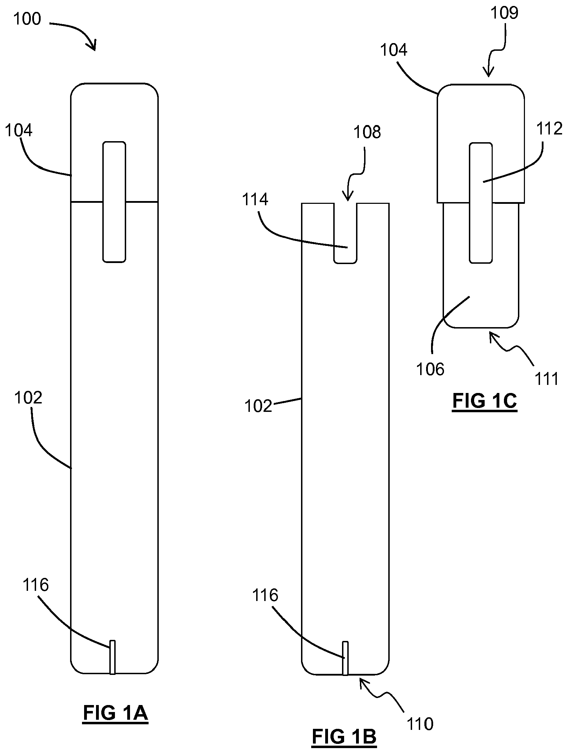

Figure 1A shows a first embodiment of a smoking substitute system 100. In this example, the smoking substitute system 100 includes a main body 102 and an aerosol delivery device in the form of a consumable 104. The consumable 104 may alternatively be referred to as a "pod", "cartridge" or "cartomizer". It should be appreciated that in other examples (i.e. open systems), the main body may be integral with the consumable such that the aerosol delivery device incorporates the main body. In such systems, a tank of the aerosol delivery device may be accessible for refilling the device.

In this example, the smoking substitute system 100 is a closed system vaping system, wherein the consumable 104 includes a sealed tank 106 and is intended for single-use only. The consumable 104 is removably engageable with the main body 102 (i.e. for removal and replacement). Figure 1A shows the smoking substitute device 100 with the main body 102 physically coupled to the consumable 104, Figure 1B shows the main body 102 of the smoking substitute system 100 without the consumable 104, and Figure 1C shows the consumable 104 of the smoking substitute system 100 without the main body 102.

The main body 102 and the consumable 104 are configured to be physically coupled together by pushing the consumable 104 into a cavity at an upper end 108 of the main body 102, such that there is an interference fit between the main body 102 and the consumable 104. In other examples, the main body 102 and the consumable may be coupled by screwing one onto the other, or through a bayonet fitting.

The consumable 104 includes a mouthpiece (not shown in Figure 1A, 1B or 1C) at an upper end 109 of the consumable 104, and one or more air inlets (not shown) in fluid communication with the mouthpiece such that air can be drawn into and through the consumable 104 when a user inhales through the mouthpiece. The tank 106 containing e-liquid is located at the lower end 111 of the consumable 104.

The tank 106 includes a window 112, which allows the amount of e-liquid in the tank 106 to be visually assessed. The main body 102 includes a slot 114 so that the window 112 of the consumable 104 can be seen whilst the rest of the tank 106 is obscured from view when the consumable 104 is inserted into the cavity at the upper end 108 of the main body 102.

The lower end 110 of the main body 102 also includes a light 116 (e.g. an LED) located behind a small translucent cover. The light 116 may be configured to illuminate when the smoking substitute system 100 is activated. Whilst not shown, the consumable 104 may identify itself to the main body 102, via an electrical interface, RFID chip, or barcode.

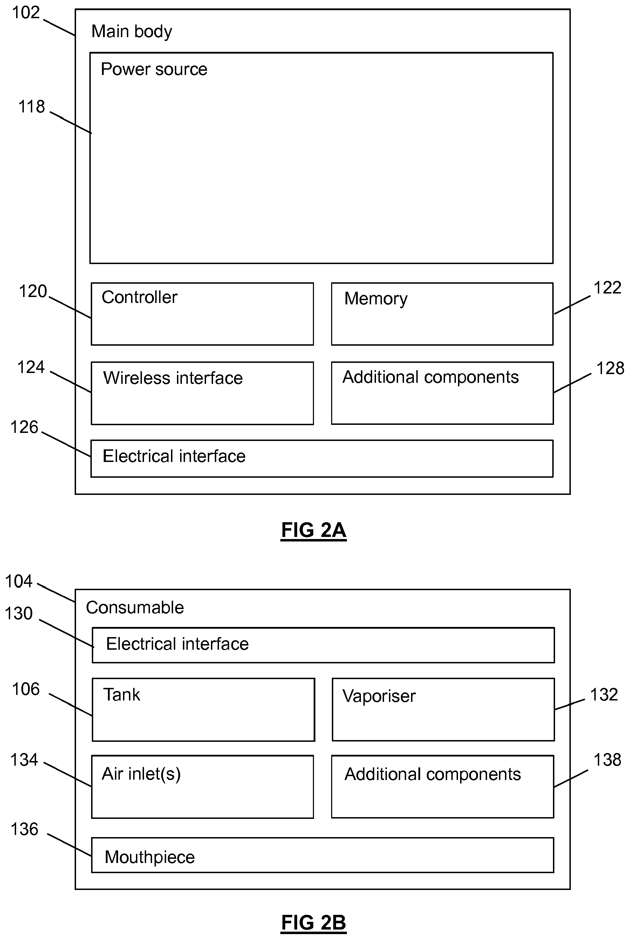

Figures 2A and 2B are schematic drawings of the main body 102 and consumable 104. As is apparent from Figure 2A, the main body 102 includes a power source 118, a controller 120, a memory 122, a wireless interface 124, an electrical interface 126, and, optionally, one or more additional components 128.

The power source 118 is preferably a battery, more preferably a rechargeable battery. The controller 120 may include a microprocessor, for example. The memory 122 preferably includes non-volatile memory. The memory may include instructions which, when implemented, cause the controller 120 to perform certain tasks or steps of a method.

The wireless interface 124 is preferably configured to communicate wirelessly with another device, for example a mobile device, e.g. via Bluetooth®. To this end, the wireless interface 124 could include a Bluetooth® antenna. Other wireless communication interfaces, e.g. WiFi®, are also possible. The wireless interface 124 may also be configured to communicate wirelessly with a remote server.

The electrical interface 126 of the main body 102 may include one or more electrical contacts. The electrical interface 126 may be located in a base of the aperture in the upper end 108 of the main body 102. When the main body 102 is physically coupled to the consumable 104, the electrical interface 126 is configured to transfer electrical power from the power source 118 to the consumable 104 (i.e. upon activation of the smoking substitute system 100).

The electrical interface 126 may be configured to receive power from a charging station when the main body 102 is not physically coupled to the consumable 104 and is instead coupled to the charging station. The electrical interface 126 may also be used to identify the consumable 104 from a list of known consumables. For example, the consumable 104 may be a particular flavour and/or have a certain concentration of nicotine (which may be identified by the electrical interface 126). This can be indicated to the controller 120 of the main body 102 when the consumable 104 is connected to the main body 102. Additionally, or alternatively, there may be a separate communication interface provided in the main body 102 and a corresponding communication interface in the consumable 104 such that, when connected, the consumable 104 can identify itself to the main body 102.

The additional components 128 of the main body 102 may comprise the light 116 discussed above.

The additional components 128 of the main body 102 may also comprise a charging port (e.g. USB or micro-USB port) configured to receive power from the charging station (i.e. when the power source 118 is a rechargeable battery). This may be located at the lower end 110 of the main body 102. Alternatively, the electrical interface 126 discussed above may be configured to act as a charging port configured to receive power from the charging station such that a separate charging port is not required.

The additional components 128 of the main body 102 may, if the power source 118 is a rechargeable battery, include a battery charging control circuit, for controlling the charging of the rechargeable battery. However, a battery charging control circuit could equally be located in the charging station (if present).

The additional components 128 of the main body 102 may include a sensor, such as an airflow (i.e. puff) sensor for detecting airflow in the smoking substitute system 100, e.g. caused by a user inhaling through a mouthpiece 136 of the consumable 104. The smoking substitute system 100 may be configured to be activated when airflow is detected by the airflow sensor. This sensor could alternatively be included in the consumable 104. The airflow sensor can be used to determine, for example, how heavily a user draws on the mouthpiece or how many times a user draws on the mouthpiece in a particular time period.

The additional components 128 of the main body 102 may include a user input, e.g. a button. The smoking substitute system 100 may be configured to be activated when a user interacts with the user input (e.g. presses the button). This provides an alternative to the airflow sensor as a mechanism for activating the smoking substitute system 100.

As shown in Figure 2B, the consumable 104 includes the tank 106, an electrical interface 130, a vaporiser 132, one or more air inlets 134, a mouthpiece 136, and one or more additional components 138.

The electrical interface 130 of the consumable 104 may include one or more electrical contacts. The electrical interface 126 of the main body 102 and an electrical interface 130 of the consumable 104 are configured to contact each other and thereby electrically couple the main body 102 to the consumable 104 when the lower end 111 of the consumable 104 is inserted into the upper end 108 of the main body 102 (as shown in Fig. 1A). In this way, electrical energy (e.g. in the form of an electrical current) is able to be supplied from the power source 118 in the main body 102 to the vaporiser 132 in the consumable 104.

The vaporiser 132 is configured to heat and vaporise e-liquid contained in the tank 106 using electrical energy supplied from the power source 118. As will be described further below, the vaporiser 132 includes a heating filament and a wick. The wick draws e-liquid from the tank 106 and the heating filament heats the e-liquid to vaporise the e-liquid.

The one or more air inlets 134 are preferably configured to allow air to be drawn into the smoking substitute system 100, when a user inhales through the mouthpiece 136. When the consumable 104 is physically coupled to the main body 102, the air inlets 134 receive air, which flows to the air inlets 134 along a gap between the main body 102 and the lower end 111 of the consumable 104.

In operation, a user activates the smoking substitute system 100, e.g. through interaction with a user input forming part of the main body 102 or by inhaling through the mouthpiece 136 as described above. Upon activation, the controller 120 may supply electrical energy from the power source 118 to the vaporiser 132 (via electrical interfaces 126, 130), which may cause the vaporiser 132 to heat e-liquid drawn from the tank 106 to produce a vapour which is inhaled by a user through the mouthpiece 136.

An example of one of the one or more additional components 138 of the consumable 104 is an interface for obtaining an identifier of the consumable 104. As discussed above, this interface may be, for example, an RFID reader, a barcode, a QR code reader, or an electronic interface which is able to identify the consumable. The consumable 104 may, therefore include any one or more of an RFID chip, a barcode or QR code, or memory within which is an identifier and which can be interrogated via the electronic interface in the main body 102.

It should be appreciated that the smoking substitute system 100 shown in figures 1A to 2B is just one exemplary implementation of a smoking substitute system. For example, the system could otherwise be in the form of an entirely disposable (single-use) system or an open system in which the tank is refillable (rather than replaceable).

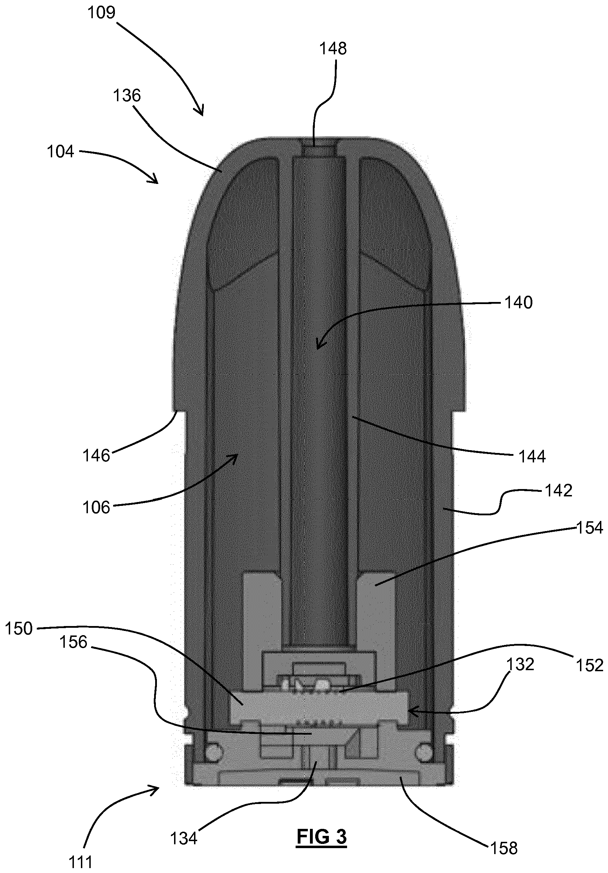

Figure 3 is a section view of the consumable 104 described above. The consumable 104 comprises a tank 106 for storing e-liquid, a mouthpiece 136 and a passage 140 extending along a longitudinal axis of the consumable 104. In the illustrated embodiment the passage 140 is in the form of a tube having a substantially circular transverse cross-section (i.e. transverse to the longitudinal axis). The tank 106 surrounds the passage 140, such that the passage 140 extends centrally through the tank 106.

A tank housing 142 of the tank 106 defines an outer casing of the consumable 104, whilst a passage wall 144 defines the passage 140. The tank housing 142 extends from the lower end 111 of the consumable 104 to the mouthpiece 136 at the upper end 109 of the consumable 104. At the junction between the mouthpiece 136 and the tank housing 142, the mouthpiece 136 is wider than the tank housing 142, so as to define a lip 146 that overhangs the tank housing 142. This lip 146 acts as a stop feature when the consumable 104 is inserted into the main body 102 (i.e. by contact with an upper edge of the main body 102).

The tank 106, the passage 140 and the mouthpiece 136 are integrally formed with each other so as to form a single unitary component and may e.g. be formed by way of an injection moulding process. Such a component may be formed of a thermoplastic material such as polypropylene.

The mouthpiece 136 comprises a mouthpiece aperture 148 defining an outlet of the passage 140. The vaporiser 132 is fluidly connected to the mouthpiece aperture 148 and is located in a vaporising chamber 156 of the consumable 104. The vaporising chamber 156 is downstream of the inlet 134 of the consumable 104 and is fluidly connected to the mouthpiece aperture 148 (i.e. outlet) by the passage 140.

The vaporiser 132 comprises a porous wick 150 and a heater filament 152 coiled around the porous wick 150. The wick 150 extends transversely across the chamber vaporising 156 between sidewalls of the chamber 156 which form part of an inner sleeve 154 of an insert 158 that defines the lower end 111 of the consumable 104 that connects with the main body 102. The insert 158 is inserted into an open lower end of the tank 106 so as to seal against the tank housing 142.

In this way, the inner sleeve 154 projects into the tank 106 and seals with the passage 140 (around the passage wall 144) so as to separate the vaporising chamber 156 from the e-liquid in the tank 106. Ends of the wick 150 project through apertures in the inner sleeve 154 and into the tank 106 so as to be in contact with the e-liquid in the tank 106. In this way, e-liquid is transported along the wick 150 (e.g. by capillary action) to a central portion of the wick 150 that is exposed to airflow through the vaporising chamber 156. The transported e-liquid is heated by the heater filament 152 (when activated e.g. by detection of inhalation), which causes the e-liquid to be vaporised and to be entrained in air flowing past the wick 150. This vaporised liquid may cool to form an aerosol in the passage 140, which may then be inhaled by a user.

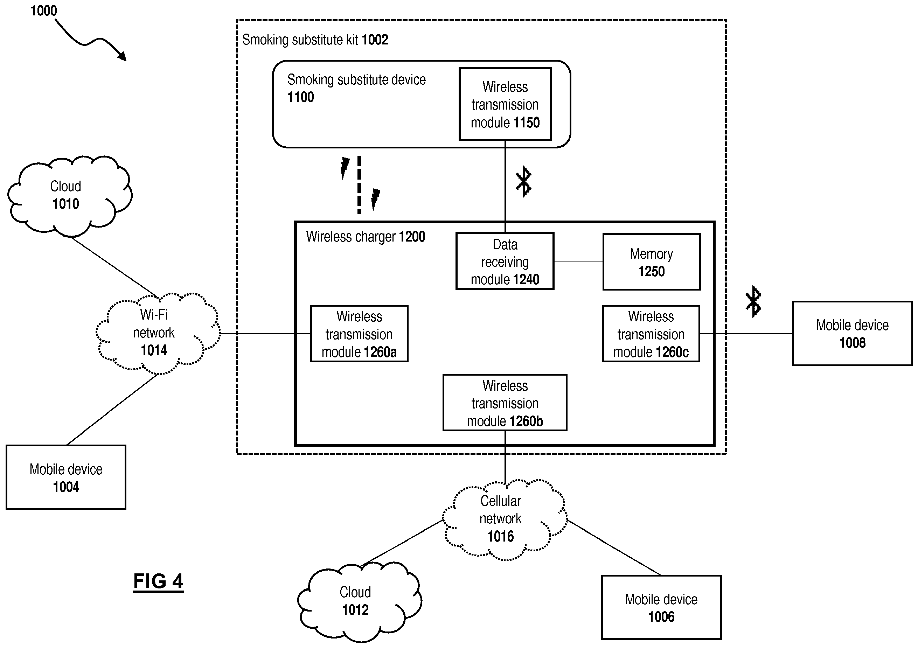

Figure 4 is a system diagram of a smoking substitute system 1000 according to e.g. an embodiment of a third aspect of the invention. The system 1000 includes primarily a smoking substitute device 1100 and a wireless charger 1200, which together make up a smoking substitute kit 1002, according to an embodiment of e.g. a second aspect of the invention. It will be noted that the wireless charger 1200 is according to an embodiment of e.g. a first aspect of the invention. In Figure 4, the solid connecting lines denote transfer of data, and the dashed connecting lines denote the transfer of power. The transfer of power between the smoking substitute device 1100 and the wireless charger 1200 may take place by electromagnetic induction effected by the alignment of a transmitter coil (not shown) in the wireless charger 1200 and a receiver coil (not shown) in the smoking substitute device 1100.

The smoking substitute device 1100 includes a wireless transmission module 1150. The wireless charger 1200 includes a data receiving module 1240, a memory 1250 connected to the data receiving module 1240, and wireless transmission modules 1260a, 1260b, 1260c. It must be stressed that wireless charges 1200 according to the present invention need not include three wireless transmission modules 1260a, 1260b, 1260c. They may include any or all of these, and may optionally include additional wireless transmission modules (not shown) which may be connected to a similar set of components as any or all of wireless transmission modules 1260a, 1260b, 1260c. Alternatively, a single wireless transmission module may be configured to perform the function of more than one of the wireless transmission modules 1260a, 1260b, 1260c, and still fall within the scope of the present invention.

In addition to the smoking substitute device 1100 and the wireless charger 1200, the system 1000 also includes a plurality of external locations or external devices. Specifically, the system 1000 includes mobile devices 1004, 1006, 1008, and cloud storage locations 1010, 1012. More specifically, cloud storage location 1010 and mobile device 1004 are connected to wireless transmission module 1260a via a Wi-Fi network 1014; cloud storage location 1012 and mobile device 1006 are connected to wireless transmission module 1260b via cellular network 1016; and mobile device 1008 is connected to wireless transmission module 1260c via a Bluetooth connection denoted by the Bluetooth logo.

The operation of system 1000 will now briefly be described. In a first step, the smoking substitute device 1100 may be placed on the wireless charger 1200, which may cause charging to begin. Alternatively, the wireless transmission module 1150 of the smoking substitute device 1100 may send a charge request which is received by the data receiving module 1240 of the wireless charger 1200. In response to that charge request, the wireless charger 1200 may begin the charging process. In addition to a charge request, the wireless transmission module 1150 of the smoking substitute device 1100 may further be configured to send other data to the wireless charger 1200, which is received by the data receiving module 1240. This data may include information about a charge status of the smoking substitute device 1100, and may include various other types of data, described elsewhere in this application.

The wireless charger 1200 may be able to transmit both the charge status information and other information to an external location, in this case, either a mobile device 1004, 1006, 1008, or a cloud storage location 1010, 1012. In some cases, wireless transmission module 1260a may be configured to transmit data including charge status information (and optionally, other information) to mobile device 1004 and cloud storage location 1010 via Wi-Fi network 1014. Alternatively, wireless transmission module 1260b may be configured to transmit data including charge status information (and optionally, other information) to mobile device 1006 and cloud storage location 1012 via cellular network 1016. Alternatively, wireless transmission module 1260c may be configured to transmit charge status information (and optionally, other information) to mobile device 1008 via a Bluetooth connection.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A wireless charger for a smoking substitute device, the wireless charger including:
a data receiving module configured to receive telemetry data from the smoking substitute device;
a wireless transmission module configured to transmit the telemetry data to an external location.

2. A wireless charger according to claim 1, wherein:
the data receiving module is configured to receive the telemetry data from the smoking substitute device via a Bluetooth connection.

3. A wireless charger according to claim 1 or claim 2, wherein:
the data receiving module is configured to receive a charging request from the smoking substitute device, and wherein the wireless charger is configured to begin charging the smoking substitute device in response to the receiving module receiving the charging request.

4. A wireless charger according to any one of claims 1 to 3, wherein:
the telemetry data includes data information about a charge status of the smoking substitute device, the information including one or more of: the amount of battery life remaining in the battery of the smoking substitute, an estimate of the amount of time until the battery of the smoking substitute device will be fully charged, an indication of whether the wireless charger is currently charging the smoking substitute device or not, and an indication that the battery is fully charged.

5. A wireless charger according to any one of claims 1 to 4, wherein:
the telemetry data received from the smoking substitute device includes information about the usage of the smoking substitute device.

6. A wireless charger according to any one of claims 1 to 5, wherein:
the wireless transmission module is configured to transmit data to the external location over one or more of: a Wi-Fi network or a cellular network.

7. A wireless charger according to any one of claims 1 to 6, wherein:
the external location is a cloud storage location, or a mobile device.

8. A wireless charger according to claim 7, wherein:
the wireless transmission module is configured to transmit data to a mobile device; and
the data which is transmitted from the wireless transmission module of the wireless charger to the mobile device includes a trigger which is configured to cause the mobile device to generate and/or display a notification relating to the information.

9. A wireless charger according to any one of claims 1 to 8, wherein:
the data receiving module is configured only to receive data from the smoking substitute device when the smoking substitute device is being charged by the wireless charger.

10. A smoking substitute kit including:
a smoking substitute device, and
a wireless charger according to any one of claims 1 to 9, wherein:
the wireless charger is configured to charge the smoking substitute device when the smoking substitute device is in proximity to the wireless charger.

11. A kit according to claim 10, wherein:
the smoking substitute device includes a wireless transmission module configured to transmit telemetry data to the data receiving module of the wireless charger.

12. A kit according to claim 11, wherein:
the wireless transmission module of the smoking substitute device is configured to transmit information about the charge status of the smoking substitute device.

13. A kit according to claim 12, wherein:
the information about the charge status of the smoking substitute device includes one or more of: the information about a charge status includes one or more of: the amount of battery life remaining in the battery of the smoking substitute, an estimate of the amount of time until the battery of the smoking substitute device will be fully charged, an indication of whether the wireless charger is currently charging the smoking substitute device or not, and an indication that the battery is fully charged.

14. A kit according to any one of claims 11 to 13, wherein:
the telemetry data includes information about the usage of the smoking substitute device.

15. A kit according to any one of claims 10 to 14, wherein:
the wireless transmission module of the smoking substitute device is configured only to transmit data to the data receiving module of the wireless charger when the smoking substitute device is being charged by the wireless charger.
